(19) Europäisches Patentamt

European Patent Office

Office européen des brevets

(11) **EP 1 750 206 A1**

(12) **EUROPEAN PATENT APPLICATION**

(43) Date of publication:
**07.02.2007 Bulletin 2007/06**

(51) Int Cl.:
***G06F 17/14*** *(2006.01)*

(21) Application number: **05300651.6**

(22) Date of filing: **04.08.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Thomson Licensing
92100 Boulogne (FR)**

(72) Inventors:
• **Yang, Sheng Hao
100871, Beijing (CN)**

• **Zou, Li
100085, Beijing (CN)**
• **Huang, Xiao
100084, Beijing (CN)**

(74) Representative: **Rossmanith, Manfred
Deutsche Thomson-Brandt GmbH
European Patent Operations
Karl-Wiechert-Allee 74
30625 Hannover (DE)**

(54) **3780-point Discrete Fourier Transformation processor**

(57) A 3780-point DFT processor is proposed, which is decomposed into 140 and 27-point DFT modules, and no twiddle factor multiplication is required. The 140-point DFT module is computed using nested WFTA, which includes a pre-add/sub module, a real multiplication module and a post-add/sub module. The 27-point DFT module is constructed by 9 and 3-point WFTA using Cooley-Turkey algorithm.

| Input Permutation Module R1 | → | Nested WFTA Module F140 | → | Block Permutation Module R2 | → | 27-Point DFT Module F27 | → | Output Permutation Module R3 | → |

Fig. 3

**EP 1 750 206 A1**

**Description**

FIELD OF THE INVENTION

The present invention relates generally to digital television broadcasting technology, and particularly to the field of design and implementation of Discrete Fourier Transformation (DFT) processor, which can be applied in communication system employed Orthogonal Frequency Division Multiplexing (OFDM) like terrestrial, satellite, cable, microwave and other transmission media, for data broadcasting, Internet and other broadband multimedia information transmission, and for integrated data service applications.

BACKGROUND OF THE INVENTION

China DTV market will be ready for Olympics in Beijing, 2008. China is creating its own terrestrial broadcasting standard. Among the two or three candidates, DMB-T appears to have the most novel and perhaps to be the most ambitious solution. One of the key technologies in DMB-T system is a 3780-point DFT processor implemented with FPGA and this technology has already been filed and granted as a Chinese patent(CN 1348141). This DFT processor achieved better bandwidth efficient than traditional FFT processors used in the Digital Video Broadcasting-Terrestrial (DVB-T) system. DVB-T adopts 2048-point FFT and 8096-point FFT processor.

Later, Samsung filed another patent (CN 1573680), which gave a lower-complexity architecture design for the 3780-point DFT processor than the one in Patent CN 1348141A.

In general, DFT is one of the fundamental operations in digital signal processing and has a wide variety of applications. Recently, two applications of DFT include asymmetric digital subscriber lines (ADSL) for ordinary phone service, and OFDM for broadcast and wireless communications. It is crucial to design dedicated processors to execute the time-consuming DFT computation in order to meet the speed requirement in high-speed applications. So it is a trend to adopt DFT processor in communications.

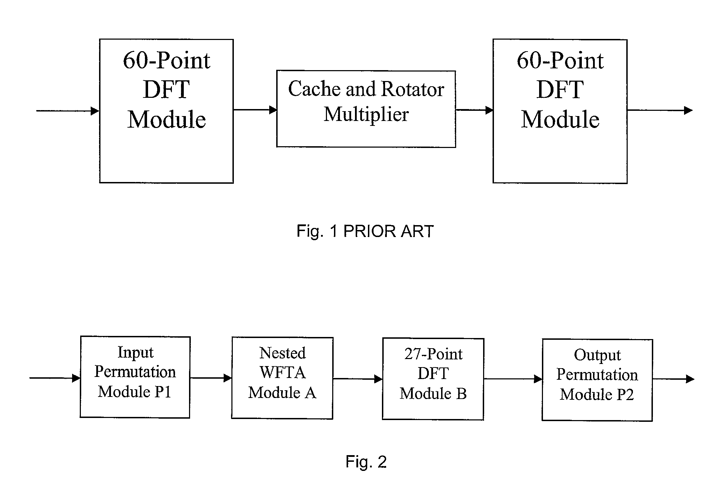

The technical schemes proposed by CN 1348141 and CN 1573680 are based on discomposing the 3780-point DFT into 60-point DFT module and 63-point DFT module using Cooley-Turkey algorithm. Between the 60-point DFT module and the 63-point DFT module, complex multiplication and transpose modules are required. The structure of the DFT processor is illustrated in Fig. 1. The 60 and 63-point DFT module are constructed by 7, 9, 3, 5, 4-point DFT module using Good-Thomas PFA. The 7, 9, 3, 5, 4-point DFT modules are computed using Winograd Fourier transform algorithm (WFTA).

The first disadvantage of these methods is that 3780 complex multiplication operations are required. A rotator is used to complete this operation. More than three thousand twiddle factors are required to be stored for multiplication, which will take up a large mount storage space. The second disadvantage is that the design of 60 and 63-point DFT module is not optimal. As a result, these schemes require large hardware consumption and bring a high cost of the DMB-T demodulator chip.

For VLSI implementation, complex multipliers and adders, the basic arithmetic units in most systolic DFT architectures, take a lot of silicon area during physical VLSI implementation.

Accordingly, there remains a need for more effective structure of 3780-point DFT processor, in which no twiddle factor multiplication is required. Also, there remains a need for reducing the number of complex multipliers and adders.

SUMMARY OF THE INVENTION

In one aspect of the present invention, a 3780-point Discrete Fourier Transformation (DFT) processor used in Orthogonal Frequency Division Multiplexing (OFDM) system is proposed. The 3780-point DFT processor comprises: an input permutation module, for performing permuting block data to match the following modules design; a 140-point DFT module, for executing 140-point DFT to input data; a 27-point DFT module, for executing 27-point DFT to input data; and an output permutation module, for performing permuting block data to generate sorted block data.

According to the present invention, the 140-point DFT module is computed using nested WFTA(Winograd Fourier transform algorithm), which includes a pre-add/sub module, a real multiplication module and a post-add/sub module.

According to the present invention, the 140-point DFT module is decomposed into 4-point, 5-point and 7-point DFT modules.

According to the present invention, the 27-point DFT module is computed using Cooley-Turkey algorithm, which is decomposed into 9-point and 3-point DFT modules.

According to the present invention, the 140-point DFT module, said 27-point DFT module, and said output permutation module could be implemented on one FPGA chip.

According to the present invention, the FPGA chip is Xilinx Virtex2 Pro 2vp100 FPGA chip.

BRIEF DESCRIPTION OF THE DRAWINGS

Fig. 1 is a block diagram showing the structure of the conventional 3780-point DFT, which is discomposed into 60-point DFT module and 63-point DFT module and is using Cooley-Turkey algorithm;

Fig. 2 is a block diagram showing the main structure of the 3780-point DFT according to the present invention;

Fig. 3 is a block diagram showing the detailed structure of the 3780-point DFT according to the present invention;

Fig. 4 is a schematic diagram showing one embodiment of the 3780-point DFT according to the present invention;

Fig. 5 is a schematic diagram showing one example of the input permutation module R1 in Fig. 3 and Fig. 4 according to the present invention;

Fig. 6 is a schematic diagram showing one example of the circuit for the logic used in the permutation address generator according to the present invention;

Fig. 7 is a schematic diagram showing the structure of the 140-point DFT (i.e., the F140 module) in Fig. 3 and Fig. 4 according to the present invention;

Fig. 8 is a schematic diagram illustrating the bank of adder is separated into two groups Kron(T4, T5) and T7 in order to reduce the number of adder and increase processing speed according to the present invention; and

Fig. 9 is a schematic diagram showing the structure of 27-point DFT (i.e., the F27 module) in Fig. 3 and Fig. 4 according to the present invention.

DETAILED DESCRIPTION OF THE PREFERRED EMBODIMENTS

The technical features of the present invention will be described further with reference to the embodiments. The embodiments are only preferable examples without limiting to the present invention. It will be well understood by the following detail description in conjunction with the accompanying drawings.

The 3780-point DFT processor according to one embodiment of the present invention is decomposed into 140-point and 27-point DFT modules, and no twiddle factor multiplication is required. The 140-point DFT module is computed using nested WFTA, which includes a pre-add/sub module, a real multiplication module and a post-add/sub module. The 27-point DFT module is constructed by 9-point and 3-point WFTA using Cooley-Turkey algorithm.

For the 3780-point DFT processor design, there are 288 options involved in this invention. The detailed descriptions are as following:

1. Top module

$\rightarrow$ M1$\rightarrow$b$\rightarrow$M2$\rightarrow$

|   | M1  | M2  |
|---|-----|-----|
| 1 | 140 | 27  |
| 2 | 27  | 140 |

b is buffer. It is different with regard to different options. The exact size and permutation operation in the buffer can be derived by the algorithm applied.

2. Module 140

The module 140 have two options with difference only in the position of b3 and C.

$\rightarrow$ T1$\rightarrow$b1$\rightarrow$T2$\rightarrow$b2$\rightarrow$T3$\rightarrow$b3$\rightarrow$C$\rightarrow$S1$\rightarrow$b4$\rightarrow$S2$\rightarrow$b5$\rightarrow$S3$\rightarrow$

or

$\rightarrow$ T1$\rightarrow$b1$\rightarrow$T2$\rightarrow$b2$\rightarrow$T3$\rightarrow$C $\rightarrow$ b3$\rightarrow$ S1$\rightarrow$b4$\rightarrow$S2$\rightarrow$b5$\rightarrow$S3$\rightarrow$

For T1, T2, and T3, all the options are listed in the table below:

|   | T1 | T3 | T3 |
|---|----|----|----|
| 1 | T (4) | T (5) | T (7) |
| 2 | T (4) | T (7) | T (5) |
| 3 | T (5) | T (4) | T (7) |
| 4 | T (5) | T (7) | T (4) |
| 5 | T (7) | T (4) | T (5) |
| 6 | T (7) | T (5) | T (4) |

Where,
WFTA4 = S(4)C(4)T(4), WFTA5 = S(5)C(5)T(5), WFTA7 = S(7)C(7)T(7).
For S1, S3, and S3, the table is the same as T1, T2, and T3.
3. Module 27
F1 → b → F2

|   | F1 | F2 |
|---|-----|-----|
| 1 | WFTA3 | WFTA 9 |
| 2 | WFTA 9 | WFTA 3 |

So, totally, there are 2*2*6*6*2 options.

Now, the detailed structure and operation of the 3780-point DFT processor is explained here. 3780 can be separated as relative prime factors 4, 5, 7 and 27. Using the Good-Thomas PFA, 3780-point DFT can be computed by the 4-point, 5-point, 7-point and 27-point DFT and WFTA for small numbers can be applied to simplify the 4-point, 5-point and 7-point DFT algorithm. To further reduce the arithmetic and structure, nested WFTA is introduced in this invention to combine 4-point, 5-point, and 7-point DFT into one module. This structure can be expressed as following equation:

$$F(3780) = P_2\big((F(4) \otimes F(5) \otimes F(7)) \otimes F(27)\big)P_1 \qquad (1)$$

The DFT architecture that realizes this algorithm has the following data processing structure: input permutation module P1, Nested WFTA module A, 27-point DFT module B and output permutation module P2. These modules are connected as shown in Fig. 2, and the position of module A and B can be exchanged.

The DFT algorithm can be expressed by a vector multiply with the matrix F(3780), which can be factorized as:

$$
\begin{aligned}
F(3780) \ &= \ P_{out}\Big\{\big[(S(4) \otimes S(5) \otimes S(7))(C(4) \otimes C(5) \otimes C(7))(T(4) \otimes T(5) \otimes T(7))\big] \otimes F(27)\Big\}P_{in} \\
&= \ P_{out}\big\{F_\pi(140) \otimes F(27)\big\}P_{in} \\
&= \ P_{out}\big\{I_{140} \otimes F(27)\big\}P(3780,140)\big\{I_{27} \otimes F_\pi(140)\big\}P(3780,27)P_{in}
\end{aligned}
$$

Where, $\otimes$ is the Kronecker tensor product, and

$$F_\pi(140) = \big(S(4) \otimes S(5) \otimes S(7)\big)\big(C(4) \otimes C(5) \otimes C(7)\big)\big(T(4) \otimes T(5) \otimes T(7)\big) \ .$$

Pin and Pout are obtained by factorizing 3780-point DFT into 4-point, 5-point, 7-point and 27-point DFT using Good-Thomas Prime Factor Algorithm (PFA). They have elements 1 and 0, and each row and column contains only one '1'. Pin permutes input block data and Pout permutes the block data to generate a sorted output. P(3780,140) and P(3780,27) are stride permutations, which are for block interleaving.

C(*), S(*) and T(*) construct Winograd Fourier Transform Algorithm (WFTA) for several small DFT by

$$F(N) = S(N)C(N)T(N).$$

T(*) and S(*) contain elements +1 and -1 only, which brings only add or sub operation. C(*) is diagonal matrix with complex elements. WFTA is effective FFT algorithm for small number such as 3, 4, 5, 7, 8, 9, 16. However, using PFA algorithm, these "small-N" algorithm can also be used to construct "large-N". $F_{\pi}(140)$ is an nested 140-point FFT of 4-point, 5-point and 7-point WFTA, where two permutations are ignored. For the 27-point FFT, we use the method that nests 3-point and 9-point WFTA into Cooley-Turkey FFT algorithm.

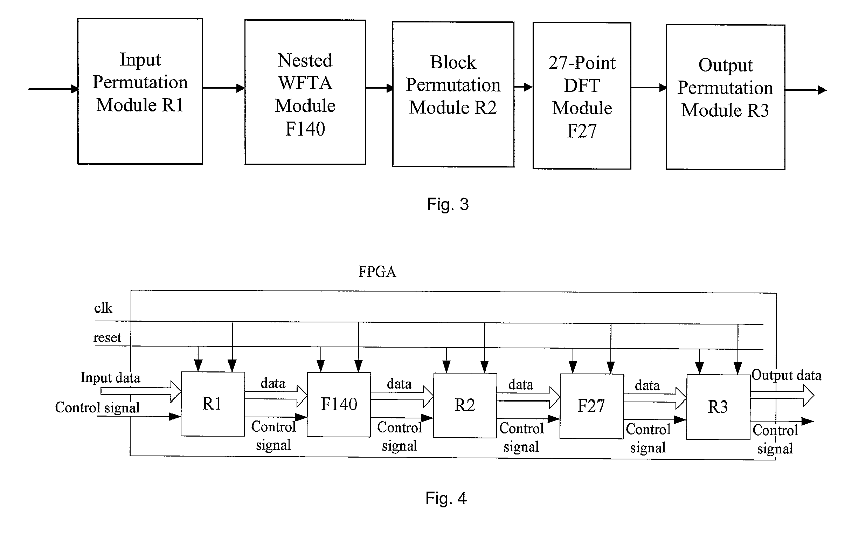

Fig. 3 and Fig. 4 are the schematics of the 3780-point DFT processor. Input data is processed by the five modules consecutively. The proposed DFT processor according to one embodiment of the present invention could be implemented in one Xilinx Virtex2 Pro 2vp100 FPGA device as shown in Fig. 4.

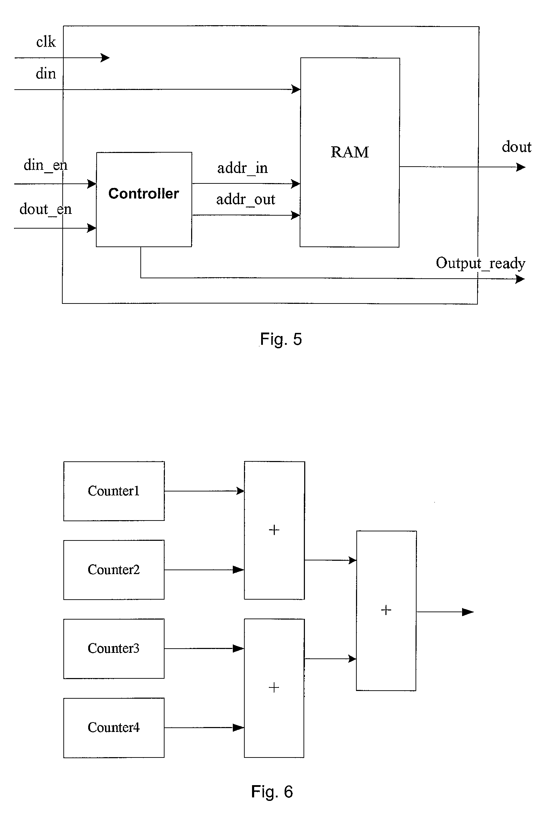

As shown in Fig. 5, the structure of the input permutation module R1 is schematically illustrated. The permutation is defined by $P_{in}$ and $P(3780,27)$. When the input_en signal is available, the Controller generates address for input data on addr_in and writes the data in din signal into the RAM. After 3780 data are saved, output_ready signal became available. When the output_en signal is available, the Controller generates address for output data on addr_out and output data is put on dout port. Inputs and outputs can be parallel to each other in order to reduce delay.

The controller generates address for input and output data according to $P_{in}$ and P(3780,27) respectively. If the address for permutation is saved in ROM, the required memory is 45.36 Kbits. A simple logic can be used to generate the address. For the input data with index i, input permutation maps it to the jth element in the permuted vector. The relationship between $i$ and $j$ is:

$$j = 189*(5*\text{mod}(i,4)+\text{mod}(i,5))+(27*\text{mod}(i,7)+\text{mod}(i,27))$$

The circuit for this logic is illustrated in Fig. 6. Each of Counters 1 to 4 has increasing step 945, 189, 27 and 1 respectively. Stride permutation is realized like a block interleaving.

R2 and R3 complete the permutation defined by $P(3780,140)$ and $P_{out}$ respectively, and their schematic are similar to R1, which is shown in Fig. 5.

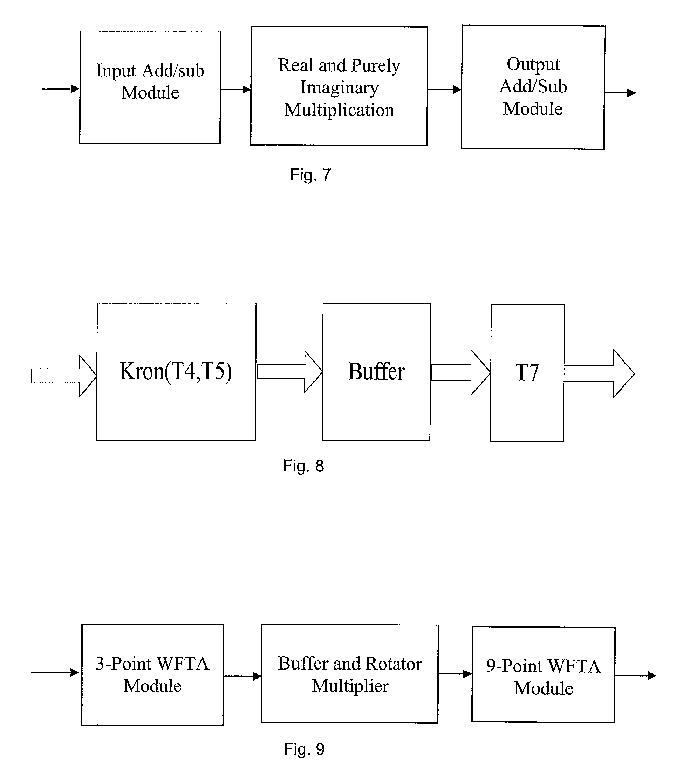

Fig. 7 is the schematic of F140 module. The module realizes the calculation of nested WFTA of 4-point, 5-point, and 7-point DFT. This module is realized in three sub-modules. First, input add/sub module functions as matrix $T(4) \otimes T(5) \otimes T(7)$ multiplied by input vector. This submodule is implemented by a bank of adder. In practice, the bank of adder is separated into two groups Kron(T4, T5) and T7 to reduce the number of adder and increase processing speed as shown in Fig. 8. Kron(T4, T5) realizes the add operations in $T(4) \otimes T(5)$, and T7 realizes the add operations in T(7). The buffer between is used for block permutation. In the middle, The real and purely imaginary multiplication module C contains general multipliers to do multiplication in the diagonal of matrix $C(4) \otimes C(5) \otimes C(7)$. Last, output add/sub module functions as matrix $S(4) \otimes S(5) \otimes S(7)$ multiplied by input vector, which has similar structure with input add/sub module.

Fig. 9 is the schematic of F27 module. 27-point FFT is factorized into 3-point and 9-point FFT. Input data is first processed by a 3-point WFTA module. The output of 3-WFTA is multiplied with the twiddle factor defined by Cooley-Turkey FFT algorithm. After a block interleaving in the Buffer, the data is fed in 9-WFTA module and complete the function of a 27-point FFT.

The nested WFTA module A in Fig. 2 is used to calculate the nested form of 4-point, 5-point and 7-point WFTA DFT, which is $F(4) \otimes F(5) \otimes F(7)$ part in aforementioned Equation 1. As shown in Fig. 7, Module A is constructed by input add/sub module, real multiplication module and output add/sub module.

The multiplication operation comparison of different architecture of 3780-point DFT is shown in Table 1. Tsinghua's patent (CN 1348141) is the No. 5, and the preferred embodiment of the present invention is No. 6.

Table 1 - Comparison of different structure

| No. | Structure | Real Mul. | Rotation (Complex Mul.) | Factors for Storage |
|---|---|---|---|---|
| 1 | 3×1260 | 19272 | 3780 | 3658 |
| 2 | 6×630 | 19272 | 3780 | 3658 |
| 3 | 12×315 | 19272 | 3780 | 3658 |
| 4 | 60×63 | 20328 | 3780 | 3658 |
| 5 | 60×63 (Tsinghua) | 29640 | 3780 | 3658 |
| 6 | 140×27 (Preferred) | 24888 | 2240 | 12 |

Different with the above disclosed preferred solution and the conventional methods in the prior arts, we also find alternative structures can be used to design 3780-point DFT processor. The idea is that separating the 3780-point DFT into two small DFT modules which can be implemented using WFTA, or nested WFTA. One characteristic of these alternative solutions is that nested WFTA is used to combine several WFTA DFT modules, which is same with the preferred solution. Table 1 lists the costs of these alternatives. 'Real Mul.' means real multiplications while 'Complex Mul.' means complex multiplications. No. 1 to 4 are four different alternative structures. One advantage of these alternative solutions is that the real multiplication operation can be reduced to almost 2/3 of conventional designs, and also less than that required in the preferred solution. However, the rotator between the two modules in these alternative structures is still required akin to Tsinghua's patent. As a result, the overall performance of these alternative solutions is not as good as this invention.

Compared with conventional solutions, the present invention greatly reduces multiplication operations and the storage of factors. The real multiplication operation is reduced 1/6 in the preferred embodiment of the present invention. The structure in the preferred embodiment requires only 2240 rotation operations and the storage of 12 factors while the conventional solutions require 3780 rotation operations and 3780 factors to be stored.

Moreover, in the VLSI implementation, the hardware cost and process delay can be reduced. One reason is that fewer arithmetic operations and fewer delay lines are required. Also, the structure in the preferred embodiment requires fewer levels of pipeline, so lower latency hardware implementation can be designed.

Although the present invention is tailored for the application in Chinese Digital TV, the general idea of this invention, separating DFT into modules which can be implemented using nested WFTA, can be used into other fields where design and implementation of non radix-2 DFT processors is required.

Whilst there has been described in the forgoing description preferred embodiments and aspects of the present invention, it will be understood by those skilled in the art that many variations in details of design or construction may be made without departing from the present invention. The present invention extends to all features disclosed both individually, and in all possible permutations and combinations.

## Claims

1. A 3780-point Discrete Fourier Transformation (DFT) processor used in Orthogonal Frequency Division Multiplexing (OFDM) system, comprising:

   an input permutation module, for performing permuting block data to match the following modules design;
   a 140-point DFT module, for executing 140-point DFT to input data;
   a 27-point DFT module, for executing 27-point DFT to input data; and
   an output permutation module, for performing permuting block data to generate sorted block data.

2. The 3780-point DFT processor according to claim 1, wherein said 140-point DFT module is computed using nested WFTA (Winograd Fourier transform algorithm), which includes a pre-add/sub module, a real multiplication module and a post-add/sub module.

3. The 3780-point DFT processor according to claim 2, wherein said 140-point DFT module is decomposed into 4-point, 5-point and 7-point DFT modules.

4. The 3780-point DFT processor according to claim 1, wherein said 27-point DFT module is computed using Cooley-Turkey algorithm, which is decomposed into 9-point and 3-point DFT modules.

5. The 3780-point DFT processor according to claim 1, wherein said input permutation module, said 140-point DFT module, said 27-point DFT module, and said output permutation module could be implemented on one FPGA chip.

6. The 3780-point DFT processor according to claim 5, wherein said FPGA chip is Xilinx Virtex2 Pro 2vp100 FPGA chip.

Fig. 1 PRIOR ART

```
+---------+     +-----------+     +---------+
| 60-Point|     | Cache and |     | 60-Point|
|   DFT   | --> |  Rotator  | --> |   DFT   | -->
|  Module |     | Multiplier|     |  Module |
+---------+     +-----------+     +---------+
```

Fig. 2

```
+-------------+     +----------+     +----------+     +-------------+
|   Input     |     |  Nested  |     | 27-Point |     |   Output    |
| Permutation | --> |   WFTA   | --> |   DFT    | --> | Permutation | -->
|  Module P1  |     | Module A |     | Module B |     |  Module P2  |
+-------------+     +----------+     +----------+     +-------------+
```

| Input Permutation Module R1 | → | Nested WFTA Module F140 | → | Block Permutation Module R2 | → | 27-Point DFT Module F27 | → | Output Permutation Module R3 |

Fig. 3

FPGA

R1 → F140 → R2 → F27 → R3

clk
reset
Input data
Control signal

data / Control signal (between modules)

Output data
Control signal

Fig. 4

9

Fig. 5

Fig. 6

```
┌──────────────┐      ┌──────────────┐      ┌──────────────┐
│ Input Add/sub│      │Real and Purely│     │   Output     │
│    Module    │─────▶│  Imaginary   │─────▶│  Add/Sub     │─────▶
│              │      │Multiplication│      │   Module     │
└──────────────┘      └──────────────┘      └──────────────┘
```

Fig. 7

```
┌──────────────┐      ┌──────────────┐      ┌──────────────┐
│              │      │              │      │              │
│  Kron(T4,T5) │══▶   │    Buffer    │══▶   │      T7      │══▶
│              │      │              │      │              │
└──────────────┘      └──────────────┘      └──────────────┘
```

Fig. 8

```
┌──────────────┐      ┌──────────────┐      ┌──────────────┐
│ 3-Point WFTA │      │Buffer and Rotator│  │ 9-Point WFTA │
│    Module    │─────▶│  Multiplier  │─────▶│    Module    │─────▶
│              │      │              │      │              │
└──────────────┘      └──────────────┘      └──────────────┘
```

Fig. 9

**European Patent Office**

## EUROPEAN SEARCH REPORT

Application Number

EP 05 30 0651

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHI-XING YANG, YU-PENG HU, CHANG-YONG PAN, LIN YANG: "Design of a 3780-point IFFT processor for TDS-OFDM" IEEE TRANSACTIONS ON BROADCASTING, vol. 48, no. 1, March 2002 (2002-03), - March 2002 (2002-03) pages 57-61, XP002361276 * the whole document * | 1-6 | G06F17/14 |
| D,A | CN 1 573 680 A (SAMSUNG ELECTRONICS CO., LTD) 2 February 2005 (2005-02-02) * abstract * | 1-6 | |
| | | | TECHNICAL FIELDS SEARCHED (IPC) |
| | | | G06F |

The present search report has been drawn up for all claims

| Place of search | Date of completion of the search | Examiner |
|---|---|---|
| Berlin | 2 January 2006 | Feng, M |

EPO FORM 1503 03.82 (P04C01)

## ANNEX TO THE EUROPEAN SEARCH REPORT
## ON EUROPEAN PATENT APPLICATION NO.

EP 05 30 0651

This annex lists the patent family members relating to the patent documents cited in the above-mentioned European search report.
The members are as contained in the European Patent Office EDP file on
The European Patent Office is in no way liable for these particulars which are merely given for the purpose of information.

02-01-2006

| Patent document cited in search report | Publication date | Patent family member(s) | Publication date |
|---|---|---|---|
| CN 1573680 A | 02-02-2005 | NONE | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1348141
- CN 1573680
- CN 1348141 A